Europäisches Patentamt

European Patent Office

Office européen des brevets

(19)

(11) **EP 0 965 817 A1**

(12) # DEMANDE DE BREVET EUROPEEN

(43) Date de publication:
**22.12.1999 Bulletin 1999/51**

(51) Int Cl.⁶: **G01B 11/00**, G01B 11/02,
G05D 1/03

(21) Numéro de dépôt: **99401372.0**

(22) Date de dépôt: **08.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **09.06.1998 FR 9807243**

(71) Demandeur: **THOMSON-CSF**
**75008 Paris (FR)**

(72) Inventeurs:
• **Waldburger, Hugues**
**94117 Arcueil Cedex (FR)**
• **Verdy, Olivier**
**94117 Arcueil Cedex (FR)**
• **Thillot, Marc**
**94117 Arcueil Cedex (FR)**

(74) Mandataire: **Albert, Claude et al**
**Thomson-CSF Propriété Intellectuelle,**
**13, Avenue du Président Salvador Allende**
**94117 Arcueil Cédex (FR)**

(54) **Procédé optique de caractérisation d'une voie le long de laquelle se déplace un véhicule guidé**

(57)  L'invention concerne un procédé de caractérisation d'une voie le long de laquelle se déplace un véhicule guidé. Le procédé comporte:

- l'acquisition d'images (21) de la voie à une cadence prédéterminée, selon un champ prédéterminé, au moyen d'un dispositif optique positionné à l'avant du véhicule et dont l'axe de visée fait un angle en site ($\theta_v$) prédéterminé avec l'axe longitudinal du véhicule;
- pour chaque image acquise, la détection (22) de la ligne matérialisant la voie, permettant d'obtenir un cliché de la portion de la voie correspondant au champ du dispositif optique;
- la lecture (23), sur le cliché, des coordonnées angulaires en site ($\theta$) et en gisement ($\phi$) de points pris sur ladite ligne, et l'estimation (24) de la distance de ces points au dispositif optique;
- une étape de calcul permettant, à partir des valeurs des coordonnées angulaires et de distances des points et au moyen d'un changement de repère, la reconstruction (25) dans un repère lié au sol de la portion du tracé de la voie correspondant au cliché ;
- le calcul (26, 27), le calcul (26,27), à partir de la portion du tracé reconstruite, du rayon de courbure et du dévers en des points de la voie pris à des distances prédéterminées en avant du véhicule.

FIG.2

EP 0 965 817 A1

## Description

L'invention concerne un procédé de caractérisation d'une voie sur laquelle se déplace un véhicule guidé. Il s'applique plus particulièrement dans l'industrie des chemins de fer aux trains dits 'trains pendulaires' pour la détermination en temps réel et avec un préavis suffisant du rayon de courbure et du dévers de la voie sur laquelle se déplace le train.

Les trains pendulaires sont équipés de systèmes de basculement ou pendulation leur conférant une inclinaison dans les virages, ce qui permet de négocier ces virages à une vitesse plus élevée.

Un système classique de basculement se fonde sur la détection du virage en temps réel grâce à l'installation dans la matrice de capteurs tels que des gyroscopes et des accéléromètres. Le basculement s'adapte à chaque instant aux signaux recueillis. Ce type de système réagit toujours avec un certain retard sur l'instant idéal de l'inclinaison des voitures. D'autre part, le basculement ne tient pas compte des paramètres fondamentaux du virage - rayon de courbure, dévers, longueur des virages de transition, ce qui provoque un effet désagréable sur le voyageur étant donné que la loi d'inclinaison que suit le véhicule n'est pas optimale.

Pour commander le système de pendulation, il est donc fondamental de connaître avec un préavis suffisant les caractéristiques de la voie ferrée en avant du véhicule, notamment le rayon de courbure et le dévers. Une solution est proposée dans la demande de brevet FR 95 13704; il s'agit d'un système de détecteur de position d'un véhicule guidé fondé sur la connaissance de la position du véhicule sur la voie et sur la connaissance préalable du tracé correspondant au trajet réalisé. Le système identifie à chaque instant la vitesse linéaire de marche et la position absolue du véhicule sur un trajet connu. Il comporte un bloc de mémoire dans lequel est intégré préalablement chaque trajet divisé en tronçons identifiés par leurs caractéristiques (position absolue, longueur, rayon de courbure, etc.). Cette solution présente plusieurs inconvénients. En particulier, elle nécessite la gestion d'une base de données très lourde, qui demande à être continuellement réactualisée en fonction des modifications de l'infrastructure. D'autre part, dans le cas d'une détection de la position absolue du véhicule par satellite, la localisation géographique risque d'être insuffisamment précise pour rendre le système performant.

La présente invention propose un procédé optique de caractérisation d'une voie le long de laquelle se déplace un véhicule guidé comprenant la reconstruction du tracé de la voie et permettant, dans le cas de véhicules ferroviaires, de déterminer en temps réel et avec un préavis suffisant le rayon de courbure et le dévers de la voie sans connaissance a priori de l'infrastructure. Plus précisément, la voie étant matérialisée par deux lignes sensiblement parallèles correspondant à deux rails de guidage du véhicule, le procédé selon l'invention est caractérisé en ce qu'il comporte:

- l'acquisition d'images de la voie à une cadence prédéterminée, selon un champ prédéterminé, au moyen d'un dispositif optique positionné à l'avant du véhicule et dont l'axe de visée fait un angle en site prédéterminé avec l'axe longitudinal du véhicule;

- pour chaque image acquise, la détection de la ligne matérialisant la voie, permettant d'obtenir un cliché de la portion de la voie correspondant au champ du dispositif optique;

- la lecture, sur le cliché, des coordonnées angulaires en site et en gisement de points pris sur ladite ligne, et l'estimation de la distance de ces points au dispositif optique;

- une étape de calcul permettant, à partir des valeurs des coordonnées angulaires et des distances des points et au moyen d'un changement de repère, la reconstruction dans un repère lié au sol de la portion du tracé de la voie correspondant au cliché ;

- le calcul, à partir de la portion du tracé reconstruite, du rayon de courbure et du dévers en des points de la voie pris à des distances prédéterminées en avant du véhicule.

Le procédé selon l'invention permet ainsi dans le cas de l'application au train pendulaire, de fournir des estimations sur le rayon de courbure et le dévers en temps réel, avec un préavis suffisant pour le contrôle du système de pendulation, sans connaissance a priori de l'infrastructure. En outre, il est indépendant des caractéristiques physiques du véhicule; en particulier, il n'est pas nécessaire de connaître la position ou la vitesse du véhicule pour la reconstruction du tracé de la voie. D'autres avantages et caractéristiques apparaîtront à la lecture de la description qui suit, illustrée par les figures annexées qui représentent:

- les figures 1a et 1b, deux vues schématisant une configuration possible pour la mise en oeuvre du procédé selon l'invention,
- la figure 2, synoptique d'un procédé selon l'invention appliqué à la configuration des figures 1a et 1b,
- la figure 3, un exemple de cliché obtenu au cours de la mise en oeuvre du procédé,
- la figure 4, les courbes donnant l'inverse du rayon de courbure et le dévers dans un virage,
- la figure 5, un schéma expliquant un mode de calcul du rayon de courbure.

Le procédé de caractérisation d'une voie selon l'invention comprend notamment dans un premier temps la reconstruction du tracé de la voie, puis le calcul du rayon de courbure et du dévers.

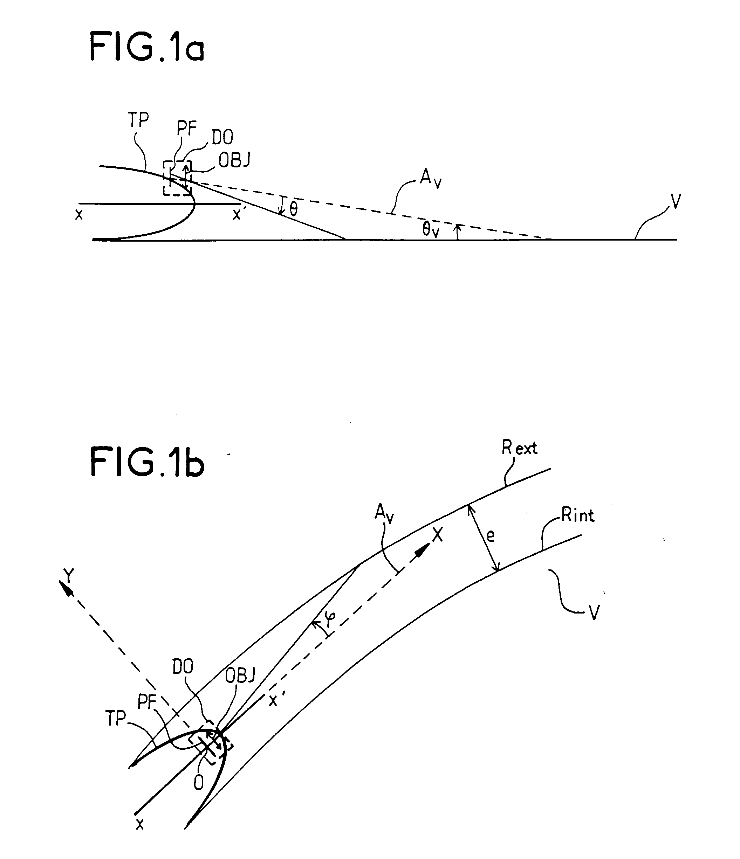

On entend par reconstruction de la voie, la détermination, à partir de l'acquisition d'une image, des coordonnées de la portion du tracé de la voie correspondant à ladite image, dans un repère lié au sol et défini à l'instant d'acquisition de l'image. Il peut s'agir par exemple des coordonnées cartésiennes de la voie dans un repère orthonormé XOY dans le plan du sol soutenant le véhicule à l'instant d'acquisition de l'image, l'axe X étant parallèle à l'axe longitudinal du véhicule, l'origine O correspondant à la projection au sol du dispositif optique. Pour décrire le procédé selon l'invention, l'exemple de mise en oeuvre choisi est celui du train pendulaire. Il s'agit d'un train muni d'un système de basculement ou de pendulation, comportant des vérins de pendulation, qui permettent d'incliner les voitures du train dans les virages afin de compenser l'effet de la force centrifuge et d'assurer aux voyageurs un maximum de confort. Ce système permet aux trains de rouler à grande vitesse sur des voies de chemin de fer classiques. Le procédé selon l'invention permet dans cet exemple d'application, la détermination du rayon de courbure et du dévers en avant du train, données qui pourront être exploitées pour le contrôle des vérins de pendulation. Les figures 1a et 1b schématisent une mise en oeuvre possible du procédé. La figure 1a est une vue de côté tandis que la figure 1b est une vue de dessus. Un train pendulaire TP représenté par sa motrice, se déplace sur une voie de chemin de fer classique V comportant deux rails parallèles, d'écartement **e** connu. Dans un virage, on appelle rail externe $R_{ext}$ le rail extérieur au virage et rail interne $R_{int}$ le rail intérieur au virage. On note xx' l'axe longitudinal de la motrice.

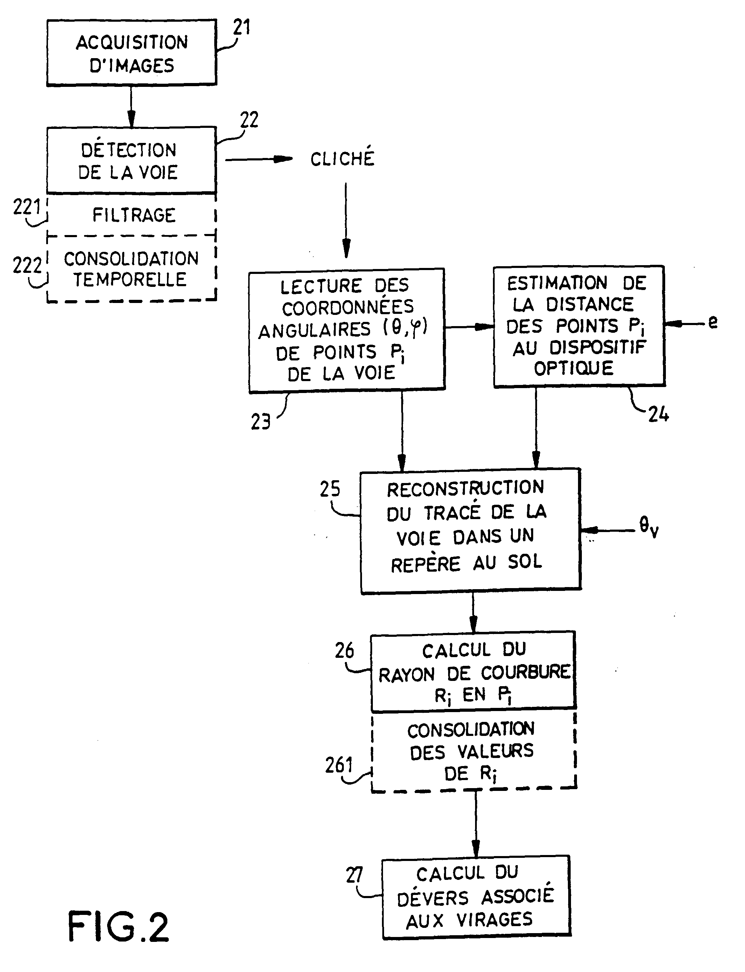

Afin d'illustrer un exemple de procédé selon l'invention pour l'application au train pendulaire, la figure 2 présente un synoptique des étapes possibles pour la mise en oeuvre de ce procédé.

Le procédé selon l'invention comporte une étape d'acquisition d'images 21 de la voie à une cadence prédéterminée, selon un champ prédéterminé, au moyen d'un dispositif optique DO positionné à l'avant du véhicule, ce dispositif pouvant être stabilisé. L'axe de visée $A_v$ du dispositif optique, défini comme l'axe issu du centre de la puille du dispositif et pointant vers le centre du champ (représenté en pointillé sur les figures 1a et 1b), fait un angle en site $\theta_v$ avec l'axe longitudinal xx' de la motrice. Selon une mise en oeuvre possible, il est contenu dans un plan vertical parallèle à cet axe. Sur la figure 1a et 1b, la configuration choisie est telle que l'axe de visée $A_v$ et l'axe xx' de la motrice se trouvent dans un même plan vertical. Le champ du dispositif optique définit l'étendue angulaire de la scène analysée par celui-ci. Les points de la scène sont repérés par leurs coordonnées angulaires en site $\theta$ et en gisement $\phi$, mesurés ici par rapport à l'axe de visée $A_v$ du dispositif.

Le dispositif optique DO est par exemple un dispositif optique passif comportant une caméra installée au sommet de la motrice. La caméra est schématisée sur les figures 1a et 1b par un objectif OBJ et un plan focal PF sur lequel se forment les images. L'acquisition d'images peut se faire alors à une cadence vidéo, typiquement 25 images par seconde, ce qui permet grâce à un traitement d'images compatible d'une telle cadence et qui est décrit ci-dessous, de fournir des mesures en temps réel, avec un préavis suffisant pour la mise en action des vérins de pendulation. La caméra peut par exemple fonctionner dans le visible-proche infrarouge. Dans ce cas, un éclairage suffisamment puissant de la scène doit être prévu pour le fonctionnement de nuit ou par faible luminosité. Il est à noter que la bande infrarouge offre une meilleure visibilité que la bande visible par mauvais temps. Le besoin d'un fonctionnement tout temps peut conduire à préférer le choix d'un capteur optronique passif en bande infrarouge. Deux bandes sont alors envisageables: 3-5 µm et 8-12 µm. Chacune présente ses propres avantages et inconvénients. En particulier, les capteurs matriciels plus courants en bande 3-5 µm permettent d'éviter toute distorsion de l'image, car tous les pixels sont acquis au même instant. La bande spectrale 8-12 µm est particulièrement bien adaptée au contraste à température ambiante. Dans ce type de capteurs, les détecteurs thermiques refroidis présentent une bonne sensibilité mais une contrainte de mise en oeuvre liée au refroidissement. Les détecteurs thermiques non refroidis, par exemple de type bolomètres, sont eux plus faciles d'utilisation mais moins sensibles. Une autre solution possible est d'utiliser simultanément deux capteurs, sensibles dans deux bandes spectrales différentes, et d'exploiter les complémentarités entre les images obtenues ou encore d'exploiter alternativement les deux capteurs.

L'acquisition des images peut également se faire au moyen d'un dispositif optique actif, comportant un laser balayant la scène correspondant au champ du dispositif. Le laser est de préférence un laser à sécurité oculaire (émettant par exemple à 1,54 µm). L'image est alors formée d'un nombre de points discrets, le dispositif optique permettant pour chaque point de déterminer une valeur de réflexion locale.

Dans une seconde étape, le procédé selon l'invention comporte la détection, pour chaque image acquise, de la ligne matérialisant la voie (étape 22 de la figure 2). La détection se fait au moyen d'algorithmes de traitement d'images classiques en optronique. Dans l'exemple de mise en oeuvre choisi, il s'agit de détecter, sur l'image, les deux rails. Ils apparaissent comme deux courbes et présentent un contraste les distinguant du fond. La détection est spécifique à la bande spectrale choisie. En bande spectrale 8-12 µm par exemple, les rails, de faible émissivité, apparaissent moins 'chauds' sur l'image que le reste du ballast, notamment en cas de ciel dégagé. Il peut également être envisageable de détecter en surplus des éléments caractéristiques tels que les boulons liant les rails aux traverses voire les griffons qui les maintiennent tout au long. Dans la plupart des cas, on connaît a priori dans la scène des zones probables de présence des rails; elles permettent d'améliorer la probabilité de détection et de réduire le taux de fausses alarmes (par préfiltrage d'images par exemple). On peut aussi en cas d'absence de détection ponctuelle avoir recours à des méthodes de filtrage des données angulaires pour reconstituer le rail dans sa totalité (interpolation spatiale, lissage, filtrage de moindre carré d'ordre n,...). Pour augmenter le rapport signal sur bruit, il est souhaitable d'appliquer des filtres (221, figure 2) qui peuvent porter sur la totalité de l'image et qui permettent de réduire le bruit dû à l'acquisition d'images et/ou aux algorithmes de détection. Le filtrage peut être décorrélé en site et en gisement. Enfin, une consolidation temporelle des détections (222, figure 2) peut également être mise en oeuvre: elle permet de prédire, sur la base des informations du passé, la zone de plus grande probabilité de présence des rails, ce qui permet encore de diminuer la probabilité de fausse alarme. Le traitement d'images lui-même devra être proche du temps réel vidéo. Il s'agit de limiter le retard entre l'acquisition de l'image et la fourniture d'une mesure au système de pendulation afin de ne pas réduire le préavis fourni. Les traitements d'image sont par exemple compatibles d'une cadence de traitement de 50 Hz, correspondant à un retard de 20 msec.

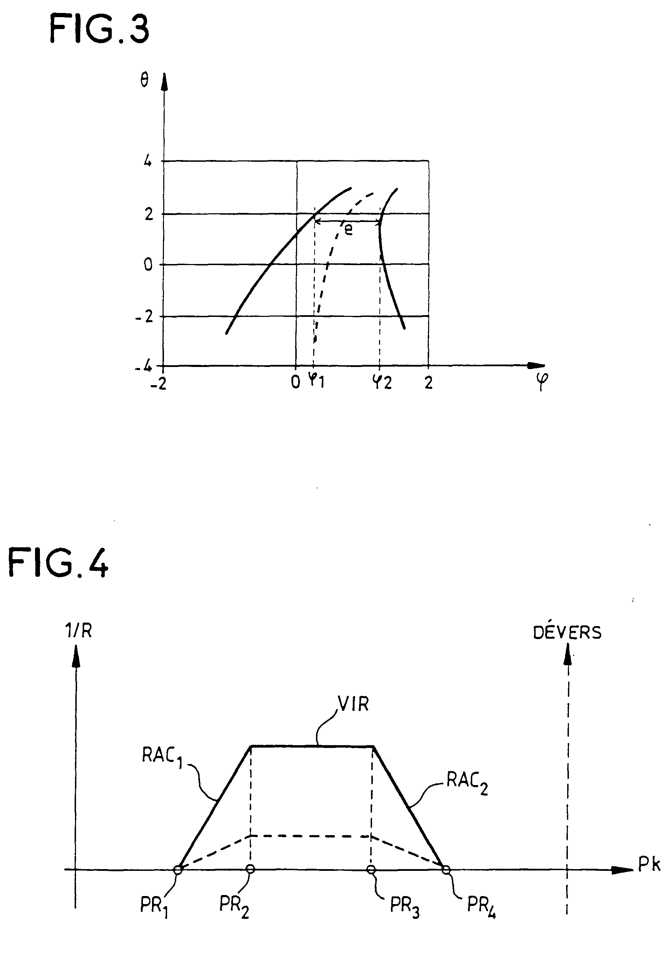

L'opération de détection permet d'obtenir, pour chaque image acquise, un cliché de la portion de la voie correspondante au champ du dispositif optique. La figure 3 illustre un exemple de cliché obtenu après détection. L'abscisse (en unités arbitraires) est proportionnelle au gisement $\phi$, l'ordonnée (en unités arbitraires) est proportionnelle au site $\theta$. Dans l'exemple de la figure 3, l'origine de mesure des angles est l'axe de visée. Le cliché correspond à l'image de la voie vue dans le plan focal du dispositif optique. L'étape suivante consiste en la reconstruction, à partir du cliché, du tracé de la portion de la voie dans un repère lié au sol. Dans l'exemple de mise en oeuvre décrit, le repère considéré est le repère orthonormé XOY tel qu'il a été défini précédemment.

Sur le cliché, on lit directement pour chaque point de la ligne ou des lignes matérialisant la voie, les coordonnées angulaires en site et en gisement (voir étape 23, figure 2). Connaissant l'axe de visée du dispositif optique, il ne manque que la distance de ces points au dispositif pour effectuer le changement de repère vers le repère lié au sol et permettre la reconstruction de la portion de la voie. Pour mesurer cette distance, dans un cas général pour lequel il n'y a pas dans la scène d'éléments caractéristiques connus (dimensions, écartement, ...) permettant d'étalonner l'image, on peut envisager l'utilisation d'un télémètre laser balayant la scène, qui permet de connaître la distance au dispositif optique des points de la voie. Lorsque l'acquisition d'images se fait au moyen d'un dispositif optique actif, le laser de télémétrie peut être le même que le laser de balayage permettant d'acquérir l'image. Dans l'exemple d'application du procédé au train pendulaire, l'écartement $\mathbf{e}$ entre les rails est constant et connu. Sur le réseau ferroviaire français par exemple, l'écartement entre les rails est de 1,435 m. Les rayons de courbure étant importants (supérieurs à quelques centaines de mètres) et les distances des points au dispositif suffisamment grandes (par exemple de 30 m à 130 m pour un angle de visée d'environ 5°, une caméra placée à 4 m du sol et un champ vertical de 6° pour le dispositif optique), on peut faire l'hypothèse selon laquelle deux points du cliché, de même site $\theta$, chacun sur un rail, sont à la même distance du dispositif optique. La distance de ces points au dispositif est alors approximée (étape 24, figure 2) par le rapport entre l'écartement $\mathbf{e}$ et la différence des gisements des deux points ($\phi_2-\phi_1$ sur la figure 3). Un changement de repère, consistant par exemple en une succession d'opérations de translations et de rotations, permet alors, à partir des informations en site, gisement et distance, de calculer les cordonnées des points dans un repère lié au sol (étape 25, figure 2), par exemple dans le repère XOY orthonormé. A partir de chaque cliché, la portion de la voie correspondante est ainsi reconstruite dans un repère dont l'origine et l'orientation des axes dépend de la position de la motrice. De proche en proche, à partir des clichés successifs, on peut également reconstruire une portion plus importante du tracé de la voie. Pour cela, il est nécessaire de fusionner les différents repères correspondant aux différents clichés dans un repère unique. On peut par exemple utiliser une méthode itérative effectuant une minimisation de l'écart entre les différents tracés obtenus par itération des opérations de translation et/ou rotation d'un repère à l'autre, ou par recalage sur des points remarquables. Il est à noter que pour établir ce tracé, aucune information sur les paramètres physiques de la motrice n'est nécessaire, en particulier la position ou la vitesse n'interviennent pas dans le procédé.

Dans le cas de l'application du procédé selon l'invention au train pendulaire, on s'intéresse plus particulièrement à la caractérisation de la voie ferrée par son rayon de courbure et son dévers évalués en des points en avant de la motrice. Partant d'une portion du tracé de la voie, correspondant à un cliché, et reconstruite dans un repère lié au sol, par exemple le repère XOY défini précédemment, on cherche à évaluer le rayon de courbure en un nombre de points prédéterminé $P_i$ pris le long de la ligne matérialisant la voie (étape 26, figure 2). Ce nombre doit être suffisant pour obtenir une information précise sur les caractéristiques d'un virage. Le virage est en effet constitué généralement d'un premier raccord, au cours duquel le rayon de courbure décroît pour atteindre une valeur constante, puis une zone à rayon constant et enfin un second raccord au cours duquel le rayon augmente. La figure 4 illustre par un schéma un exemple de virage (le rayon est pris arbitrairement positif), la courbe en trait plein représentent l'inverse du rayon (1/R) en fonction du point kilométrique Pk sur la voie, correspondant à une abscisse curviligne. Le premier raccord $RAC_1$ se situe entre les points kilométriques $PR_1$ et $PR_2$, le second raccord $RAC_2$ se situe entre les points kilométriques $PR_3$ et $PR_4$, la zone à rayon constant VIR se trouvant entre les deux raccords. Le virage présente donc 4 points de rupture $PR_1$, $PR_2$, $PR_3$, $PR_4$ qu'il est important de localiser avec un préavis suffisant. Cependant, le nombre de points Pi est limité par la précision de mesure: l'évaluation de rayons de courbure de points pris à des distances trop proches risque de conduire à des résultats aberrants. Aussi faut-il trouver un bon compromis. Les travaux menés par la déposante montrent que, par exemple, dans un cas concret, une distance de quelques mètres entre deux points d'évaluation du rayon de courbure semble être un bon compromis.

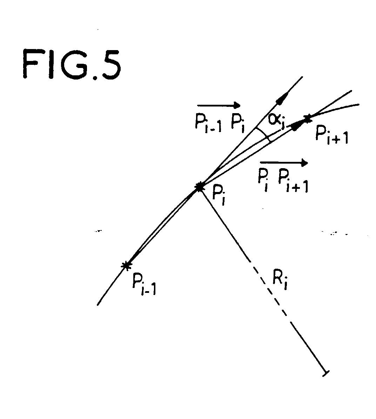

La figure 5 illustre une méthode de calcul du rayon de courbure selon le procédé. Assez naturellement, la distance élémentaire séparant deux points d'évaluation du rayon de courbure peut être prise constante, mais ce n'est pas obligatoire. Le rayon de courbure $R_i$ du point $P_i$ peut être évalué simplement par le rapport entre la distance élémentaire séparant le point $P_i$ d'un des deux points voisins $P_{i-1}$ ou $P_{i+1}$ et l'angle $\alpha_i$ entre les deux vecteurs $\overrightarrow{P_{i-1}P_i}$ et $\overrightarrow{P_iP_{i+1}}$. Une autre méthode de calcul du rayon de courbure est la suivante. On compare la portion du tracé de la voie reconstruite à partir du cliché et un tracé calculé par exemple par une méthode de reconstruction par éléments finis en faisant une hypothèse sur la valeur du rayon de courbure recherché. L'utilisation d'un estimateur qui minimise l'écart entre les deux courbes permet de déterminer le rayon de courbure. Il est intéressant d'effectuer en outre une consolidation des valeurs de rayon de courbure calculées (étape 261, figure 2) en corrélant les valeurs évaluées lors de clichés successifs. A partir de chaque cliché en effet, on obtient une série de valeurs de rayons de courbure correspondant à différents points kilométriques. Sans avoir besoin de connaître la vitesse de déplacement de la motrice, on peut corréler les séries de valeurs obtenues, par exemple par une méthode itérative similaire à celle qui permet de reconstruire, dans un même repère, une portion de voie correspondant à plusieurs clichés successifs et qui a été décrite précédemment. On peut alors effectuer des moyennes sur les valeurs des rayons de courbure calculées à des positions identiques de la voie, ce qui permet d'augmenter notablement la précision sur les calculs.

Le dévers consiste en une différence de hauteur entre le rail extérieur et le rail intérieur dans un virage. Il existe sur les voies de chemin de fer classiques pour compenser la force centrifuge subie par le train et les voyageurs. Dans le cas de l'application au train pendulaire, il est très important de connaître avec un préavis suffisant le dévers de la voie afin de ne pas surestimer l'inclinaison à donner aux voitures du train. Sur la figure 4, le dévers correspondant à l'exemple de virage choisi est représenté en pointillé. Pour estimer le dévers (étape 27, figure 2), plusieurs méthodes sont possibles. Dans certains cas, il existe une relation statistique connue entre le rayon de courbure et le dévers. L'estimation du rayon de courbure en avant de la motrice grâce au procédé selon l'invention permet alors de connaître directement le dévers dans les différentes parties du virage.

On peut aussi effectuer une évaluation en temps réel du dévers, sans connaissance a priori du ballast. Par exemple selon la méthode suivante. Le rayon de courbure est estimé à partir du tracé de la voie reconstruit dans le repère lié au sol et grâce au procédé préalablement décrit, sur le rail intérieur au virage, pris comme référence pour le calcul du dévers. En un point donné de la voie, connaissant le rayon de courbure et l'écartement entre les rails, on peut calculer le tracé du rail externe en faisant une hypothèse sur la valeur du dévers que l'on fait varier de façon itérative. Ce tracé est comparé au tracé du rail extérieur mesuré, reconstruit à partir du cliché. L'écart entre les deux tracés est minimisé afin de déterminer la valeur du dévers. On peut également travailler dans le plan du cliché (correspondant au plan focal du dispositif optique), au moyen d'une transformation inverse au changement de repère qui a permis de passer du cliché au repère lié au sol. On détermine par cette transformation le tracé calculé du rail extérieur dans le plan du cliché; la comparaison se fait alors avec le rail détecté sur le cliché.

Le procédé de caractérisation selon l'invention permet ainsi l'estimation du rayon de courbure et du dévers en avant de la motrice, en des points de la voie situés à des distances prédéterminées du dispositif optique, avec un préavis suffisant pour permettre l'utilisation de ces informations pour le contrôle des vérins de pendulation d'un train pendulaire. Dans un exemple de cas concret, la déposante a estimé ce préavis en terme de distance à environ 120 m.

## Revendications

1.    Procédé optique de caractérisation d'une voie (V) le long de laquelle se déplace un véhicule guidé (TP), la voie étant matérialisée par deux lignes sensiblement parallèles correspondant à deux rails de guidage du véhicule, caractérisé en ce qu'il comporte:

   -    l'acquisition d'images (21) de la voie à une cadence prédéterminée, selon un champ prédéterminé, au moyen d'un dispositif optique (DO) positionné à l'avant du véhicule et dont l'axe de visée fait un angle en site ($\theta_v$) prédéterminé avec l'axe longitudinal (xx') du véhicule;
   -    pour chaque image acquise, la détection (22) de la ligne matérialisant la voie, permettant d'obtenir un cliché de la portion de la voie correspondant au champ du dispositif optique;
   -    la lecture (23), sur le cliché, des coordonnées angulaires en site ($\theta$) et en gisement ($\phi$) de points pris sur ladite ligne, et l'estimation (24) de la distance de ces points au dispositif optique;
   -    une étape de calcul permettant, à partir des valeurs des coordonnées angulaires et des distances des points et au moyen d'un changement de repère, la reconstruction (25) dans un repère lié au sol, de la portion du tracé de la voie correspondant au cliché ;

- le calcul (26,27), à partir de la portion du tracé reconstruite, du rayon de courbure et du dévers en des points de la voie pris à des distances prédéterminées en avant du véhicule.

2. Procédé selon la revendication 1, caractérisé en ce que l'acquisition des images se fait au moyen d'un dispositif optique passif comportant une caméra.

3. Procédé selon la revendication 1, caractérisé en ce que l'acquisition des images se fait au moyen d'un dispositif optique actif, comportant un laser balayant le champ selon un nombre prédéterminé de points et fournissant pour chaque point une valeur de réflexion locale permettant d'établir le cliché.

4. Procédé selon l'une des revendications précédentes, caractérisé en ce que l'acquisition des images est couplée à une étape de télémétrie, permettant, au moyen d'un télémètre laser balayant le champ, de connaître la distance au dispositif optique des points de la ligne pris sur le cliché.

5. Procédé selon l'une des revendications 1 à 3, caractérisé en ce que la valeur de l'écartement entre les rails étant connue, la valeur de la distance des points appartenant aux lignes détectées sur le cliché, de même site, au dispositif, est donnée sensiblement par le rapport entre la valeur de l'écartement et la valeur de la différence des gisements des deux points considérés.

6. Procédé selon l'une des revendications précédentes, caractérisé en ce que la probabilité de fausse alarme au cours de la détection de la ligne est diminuée au moyen d'une consolidation temporelle (221) de la détection, permettant de prédire, sur la base des informations du passé, la zone de plus grande probabilité de présence de la ligne.

7. Procédé selon l'une des revendications précédentes, caractérisé en ce que le rayon de courbure en un point $P_i$ de la ligne est estimé par le rapport entre la distance élémentaire séparant le point $P_i$ d'un des deux points voisins $P_{i-1}$ ou $P_{i+1}$ et l'angle $\alpha_i$ entre les deux vecteurs $\overrightarrow{P_{i-1}P_i}$ et $\overrightarrow{P_iP_{i+1}}$.

8. Procédé selon l'une des revendications 1 à 6, caractérisé en ce que le rayon de courbure en un point $P_i$ de la ligne est calculé par une méthode itérative consistant à minimiser l'écart entre la portion de la voie reconstruite et la portion de la voie calculée avec une hypothèse sur le rayon de courbure recherché.

9. Procédé selon l'une quelconque des revendications 7 à 9, caractérisé en ce que des séries de valeurs de rayons de courbure obtenues lors de clichés successifs sont corrélées (261), afin de moyenner les valeurs des rayons de courbure calculées à des positions identiques sur la voie et d'augmenter ainsi la précision sur leurs calculs.

10. Procédé selon l'une des revendications précédentes, caractérisé en ce que la valeur du dévers en un point prédéterminé est obtenue directement à partir de la valeur du rayon de courbure calculée en ce point.

11. Procédé selon l'une des revendications 1 à 9, caractérisé en ce que le dévers est calculé dans un virage par une méthode itérative consistant à minimiser l'écart entre la portion du tracé du rail extérieur au virage reconstruite et la portion du tracé du rail extérieur calculée en faisant une hypothèse sur la valeur du dévers recherché, à partir de la portion du tracé du rail intérieur au virage et connaissant le rayon de courbure.

12. Application du procédé selon l'une des revendications précédentes pour l'estimation du rayon de courbure et du dévers en des points de la voie situés à des distances prédéterminées du dispositif optique à un train pendulaire, caractérisé en ce que les informations de rayon de courbure et de dévers sont utilisées pour le contrôle des vérins de pendulation du train.

## FIG.1a

## FIG.1b

ACQUISITION
D'IMAGES · 21

↓

DÉTECTION
DE LA VOIE · 22 → CLICHÉ

221 · FILTRAGE

222 · CONSOLIDATION
TEMPORELLE

↓

LECTURE DES
COORDONNÉES
ANGULAIRES $(\theta,\varphi)$
DE POINTS $P_i$
DE LA VOIE · 23

→

ESTIMATION DE
LA DISTANCE
DES POINTS $P_i$
AU DISPOSITIF
OPTIQUE · 24 ← e

↓ ↓

25 · RECONSTRUCTION
DU TRACÉ DE LA
VOIE DANS UN
REPÈRE AU SOL ← $\theta_v$

↓

26 · CALCUL DU
RAYON DE COURBURE
$R_i$ EN $P_i$

261 · CONSOLIDATION
DES VALEURS
DE $R_i$

↓

27 · CALCUL DU
DÉVERS ASSOCIÉ
AUX VIRAGES

# FIG.2

# FIG.3

# FIG.4

# FIG.5

Office européen
des brevets

**RAPPORT DE RECHERCHE EUROPEENNE**

Numéro de la demande

EP 99 40 1372

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 527 665 A (MATRA SEP IMAGERIE ET INF SOCI) 17 février 1993 (1993-02-17) * le document en entier * --- | 1-5,12 | G01B11/00 G01B11/02 G05D1/03 |
| A | FR 2 716 978 A (SFIM IND) 8 septembre 1995 (1995-09-08) * abrégé; figure 1 * --- | 3,4 | |
| A | EP 0 361 914 A (HONDA GIKEN KOGYO K.K.) 4 avril 1990 (1990-04-04) * abrégé; figure 14 * --- | 1,7 | |
| A | US 5 229 941 A (HATTORI AKIRA) 20 juillet 1993 (1993-07-20) * abrégé; figure 4 * --- | 1,7 | |
| A | US 5 617 085 A (TSUTSUMI KAZUMICHI ET AL) 1 avril 1997 (1997-04-01) * abrégé; figures 1-4 * ----- | 1,3,4 | |

| | DOMAINES TECHNIQUES RECHERCHES (Int.Cl.6) |
|---|---|
| | G01B G05D |

Le présent rapport a été établi pour toutes les revendications

| Lieu de la recherche | Date d'achèvement de la recherche | Examinateur |
|---|---|---|
| BERLIN | 2 août 1999 | Vorropoulos, G |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                                            
& : membre de la même famille, document correspondant

EPO FORM 1503 03.82 (F04C02)

**ANNEXE AU RAPPORT DE RECHERCHE EUROPEENNE
RELATIF A LA DEMANDE DE BREVET EUROPEEN NO.**

EP 99 40 1372

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-08-1999

| Document brevet cité au rapport de recherche | | Date de publication | Membre(s) de la famille de brevet(s) | | | Date de publication |
|---|---|---|---|---|---|---|
| EP 0527665 | A | 17-02-1993 | FR | 2679357 | A | 22-01-1993 |
| | | | DE | 69204239 | D | 28-09-1995 |
| | | | DE | 69204239 | T | 25-01-1996 |
| | | | ES | 2076712 | T | 01-11-1995 |
| FR 2716978 | A | 08-09-1995 | AUCUN | | | |
| EP 361914 | A | 04-04-1990 | JP | 1897063 | C | 23-01-1995 |
| | | | JP | 2090379 | A | 29-03-1990 |
| | | | JP | 6024035 | B | 30-03-1994 |
| | | | JP | 2090380 | A | 29-03-1990 |
| | | | JP | 1897064 | C | 23-01-1995 |
| | | | JP | 2090381 | A | 29-03-1990 |
| | | | JP | 6024036 | B | 30-03-1994 |
| | | | DE | 68925091 | D | 25-01-1996 |
| | | | DE | 68925091 | T | 09-05-1996 |
| | | | US | 5359666 | A | 25-10-1994 |
| US 5229941 | A | 20-07-1993 | DE | 3912353 | A | 09-11-1989 |
| US 5617085 | A | 01-04-1997 | JP | 9142236 | A | 03-06-1997 |
| | | | DE | 19629775 | A | 22-05-1997 |

EPO FORM P0460